# EUROPEAN PATENT APPLICATION

(11) **EP 4 579 097 A1**
(43) Date of publication of application: **02.07.2025**
(21) Application number: 23857002.2
(22) Date of filing: 07.07.2023
(51) Int. Cl.: F16C 19/10, F16C 33/58

(54) **THRUST BEARING**

(30) Priority: 24.08.2022 JP 2022133392
(71) Applicant: Minebea Mitsumi Inc., Kitasaku-gun, Nagano 3890293 (JP)
(72) Inventor: FURUKOSHI, Akimi, Kitasaku-gun, Nagano 389-0293 (JP)
(74) Representative: Regimbeau
(86) International application number: PCT/JP2023/025273
(87) International publication number: WO 2024/042885

(57) **Abstract**

An object is to provide a thrust bearing for allowing a gap between a cover and a bearing washer to be accurately set by reducing the curve of a cover at the time of crimping. A thrust bearing (1) includes a cover (40) disposed covering outer peripheral surfaces of a first bearing washer (10) and a second bearing washer and holding the first bearing washer (10) and the second bearing washer in the axial direction. The cover (40) includes a cylindrical part (41) facing the outer peripheral surfaces of the first bearing washer (10) and the second bearing washer and a bent part (42) bent over the entire circumference with respect to the cylindrical part (41) at at least one of the axial end parts of the cylindrical part (41). A chamfered part (12) is formed at a corner part of the outer peripheral surface of at least one of the first bearing washer (10) and the second bearing washer. The chamfered part (12) and the bent part (42) of the cover (40) face each other. To address the above object, a circumferential groove (44) is formed at a boundary part between the bent part (42) and the cylindrical part (41) over the entire circumference of the inner peripheral surface.

## Description

### Technical Field

The present invention relates to a thrust bearing, and more particularly to an improvement of a cover for connecting a first bearing washer and a second bearing washer.

### Background Art

The thrust bearing is a bearing for receiving a thrust load with rolling elements disposed between a first bearing washer and a second bearing washer. To prevent separation of the first bearing washer and the second bearing washer, a cover may be disposed so as to cover outer peripheries of both the bearing washers (see, for example, Patent Documents 1 and 2).

### Citation List

### Patent Literature

Patent Document 1: JP H08-004759 A
Patent Document 2: JP 2020-143708 A

### Summary of Invention

### Technical Problem

The cover is provided with a part facing chamfered parts provided at corner parts of the bearing washers by bending end parts of a cylindrical part thereof, preventing the bearing washers from being separated from each other. However, the cover may be curved when the end parts of the cylindrical part are crimped, and this causes a variation in a gap between the cover and the bearing washers.

The present invention has been made in view of the above circumstances, and an object of the present invention is to provide a thrust bearing including a cover formed such that a curve thereof at the time of crimping is suppressed and this allows a gap between the cover and bearing washers to be accurately set.

### Solution to Problem

The present invention provides a thrust bearing including: a first bearing washer including a raceway groove; a second bearing washer including a raceway groove; a rolling element disposed between the raceway groove of the first bearing washer and the raceway groove of the second bearing washer; and a holding member disposed covering outer peripheral surfaces or inner peripheral surfaces of the first bearing washer and the second bearing washer and holding the first bearing washer and the second bearing washer in an axial direction, the holding member including a cylindrical part facing the outer peripheral surfaces or the inner peripheral surfaces of the first bearing washer and the second bearing washer and a bent part bent over an entire circumference with respect to the cylindrical part at at least one of axial end parts of the cylindrical part, and a chamfered part being formed at a corner part of an outer peripheral surface or an inner peripheral surface of at least one of the first bearing washer and the second bearing washer, the chamfered part and the bent part of the holding member facing each other, in which a circumferential groove is formed at a boundary part between the bent part and the cylindrical part over an entire circumference of an inner peripheral surface or an outer peripheral surface.

The present invention also provides a method for manufacturing a thrust bearing including a first bearing washer including a raceway groove, a second bearing washer including a raceway groove, a rolling element disposed between the raceway groove of the first bearing washer and the raceway groove of the second bearing washer, and a holding member disposed covering outer peripheral surfaces or inner peripheral surfaces of the first bearing washer and the second bearing washer and holding the first bearing washer and the second bearing washer in an axial direction, the holding member including a cylindrical part facing the outer peripheral surfaces or the inner peripheral surfaces of the first bearing washer and the second bearing washer and a bent part bent over an entire circumference with respect to the cylindrical part at at least one of axial end parts of the cylindrical part, and a chamfered part being formed at a corner part of an outer peripheral surface or an inner peripheral surface of at least one of the first bearing washer and the second bearing washer, the chamfered part and the bent part of the holding member facing each other, the method including; forming the cylindrical part and the bent part into a cylindrical shape having a uniform cross section; forming a circumferential groove over an entire circumference of an inner peripheral surface or an outer peripheral surface at a terminal part of the cylindrical part; and bending the cylindrical part at the circumferential groove to form the bent part by crimping.

### Advantageous Effects of Invention

According to the present invention, there is provided a thrust bearing including the holding member formed such that a curve thereof at the time of crimping is suppressed and this allows the gap between the holding member and the bearing washers to be accurately set.

### Brief Description of Drawings

FIG. 1 is a cross-sectional view illustrating a thrust bearing according to a first embodiment of the present invention.
FIG. 2 is an enlarged cross-sectional view illustrating a main part of the thrust bearing according to the embodiment.
FIG. 3 is a cross-sectional view illustrating a cover according to the first embodiment in a state before being crimped.
FIG. 4(A) is a cross-sectional view illustrating a cover according to a conventional example in a state before being crimped, and FIG. 4(B) is a cross-sectional view illustrating the cover after being crimped.
FIG. 5(A) is a cross-sectional view illustrating a cover according to a modification of the first embodiment in a state before being crimped, and FIG. 5(B) is a cross-sectional view illustrating the cover after being crimped.
FIG. 6(A) is a cross-sectional view illustrating a cover in a thrust bearing according to a second embodiment of the present invention in a state before being crimped, and FIG. 5(B) is a cross-sectional view illustrating the cover after being crimped.
FIG. 7(A) is a cross-sectional view illustrating a cover according to a modification of the second embodiment in a state before being crimped, and FIG. 7(B) is a cross-sectional view illustrating the cover after being crimped.

### Description of Embodiments

### 1. First Embodiment

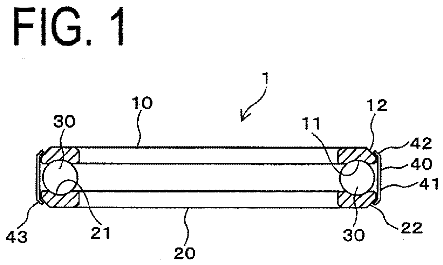

A thrust bearing according to one embodiment of the present invention will be described with reference to FIGS 1 to 4. Note that in the following description, an "axial direction" indicates a direction of a central axis of the thrust bearing, and a "radial direction" indicates a direction orthogonal to the axial direction. In addition, a "circumferential direction" indicates a direction of rotation about the central axis. Further, terms indicating directions such as "upper" and "lower" are used to indicate the up-down direction in FIG. 1.

FIG. 1 is a cross-sectional view illustrating a thrust bearing 1 according to the embodiment. The thrust bearing 1 includes a first bearing washer 10 and a second bearing washer 20 disposed to face each other. The first bearing washer 10 and the second bearing washer 20 have an annular shape, and raceway grooves 11, 21 having an arc-shaped cross section are formed over the entire circumference of the facing surfaces of the first bearing washer 10 and the second bearing washer 20.

A plurality of rolling elements 30 are disposed at equal intervals in the circumferential direction at bearing rings having a circular cross section constituted by the raceway grooves 11, 21. The rolling elements 30 have a spherical shape, and a distance between adjacent rolling elements 30 is kept constant by a cage (not illustrated).

A chamfered part 12 is formed over the entire circumference at an axially upper corner part of the outer peripheral surface of the first bearing washer 10. In addition, a chamfered part 22 is formed over the entire circumference at an axially upper corner part of the outer peripheral surface of the second bearing washer 20. A cover (holding member) 40 for covering the outer peripheral surfaces of the first bearing washer 10 and the second bearing washer 20 is attached to the first bearing washer 10 and the second bearing washer 20.

The cover 40 has a substantially cylindrical shape, and includes a cylindrical part 41 facing the outer peripheral surfaces of the first bearing washer 10 and the second bearing washer 20, and bent parts 42, 43 bent inward at axially upper and lower end parts of the cylindrical part 41. The axially upper bent part 42 faces the chamfered part 12 of the first bearing washer 10, and the axially lower bent part 43 faces the chamfered part 22 of the second bearing washer 20. A circumferential groove 44 is formed at a boundary between the bent part 42 and the cylindrical part 41.

### 2. Method of Assembling Thrust Bearing

First, the axially lower bent part 43 of the cylindrically formed component of the cover 40 is formed. In this case, a disk-shaped blank is punched from a flat plate, and the blank is drawn into a cup shape having a tapered part to serve as the bent part 43 at a corner part of the blank. Next, the inside of the tapered part is punched out to form a component of the cover 40 having the bent part 43.

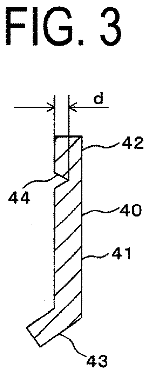

A plurality of rolling elements 30 held by a cage (not illustrated) are placed in the raceway grooves 21 of the second bearing washer 20, and the first bearing washer 10 is placed on the rolling elements 30. This assembly is inserted into the component of the cover 40 formed with the bent part 43. As illustrated in FIG. 3, a circumferential groove 44 is formed along the entire circumference of the inner periphery of the axially upper end part of the component of the cover 40.

The circumferential groove 44 has a V-shaped cross section, and has a depth equal to or less than half of the thickness of the cylindrical part 41 of the cover 40, and preferably equal to or less than one-third of the thickness of the cylindrical part 41. Then, roll crimping is performed at the outer peripheral surface of the upper part of the circumferential groove 44 to form the bent part 42. As a result, the first bearing washer 10 and the second bearing washer 20 are brought into a state of being inseparable from each other in the axial direction due to the bent parts 42, 43 of the cover 40.

### 3. Effect

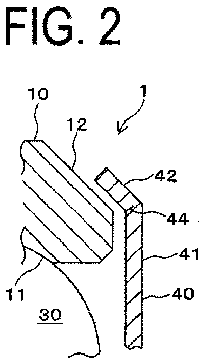

In the thrust bearing 1 having the above-described configuration, the circumferential groove 44 is formed over the entire circumference of the inner peripheral surface at the boundary part between the bent part 42 and the cylindrical part 41 of the cover 40, and thus stress is concentrated when the bent part 42 is roll-crimped because the bottom wall thickness of the circumferential groove 44 is thin, and the circumferential groove 44 is crushed and deformed such that the cover 40 is bent at the circumferential groove 44. Then, the roll crimping is completed when the two inner side surfaces of the circumferential groove 44 having the V-shaped cross section come into close contact with each other. Therefore, as illustrated in FIG. 2, the cross-sectional shape of the bent part 42 is a linear shape or a shape approximate to the linear shape.

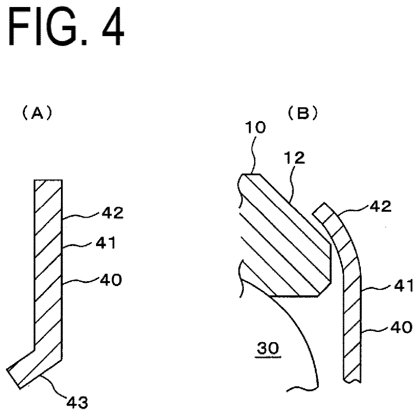

On the other hand, in the conventional thrust bearing having no circumferential groove 44 as illustrated in FIG. 4(A), when the bent part 42 is formed by crimping, a stress is uniformly applied to the part to be the bent part 42, and the cross-sectional shape of the bent part 42 becomes a curved shape as illustrated in FIG. 4(B). This causes a dimensional variation in the gap between the bent part 42 and the first bearing washer 10.

As described above, in the thrust bearing 1 of the above first embodiment, the bent part 42 can be formed into a linear shape or a shape approximate to the linear shape by reducing a curve of the bent part 42 at the time of crimping, and thus the gap between the bent part 42 and the first bearing washer 10 can be accurately set.

In particular, in the above first embodiment, the circumferential groove 44 before crimping is formed to have a V-shaped cross section, and the two inner side surfaces of the circumferential groove 44 are brought into close contact with each other after crimping. Thus, by setting the opening angle of the circumferential groove 44, the angle formed by the bent part 42 and the cylindrical part 41 can be set, and the gap between the distal end edge of the bent part 42 and the chamfered part 12 of the first bearing washer 10 can be accurately set.

In addition, in the above first embodiment, the depth of the circumferential groove 44 is set to half or less of the thickness of the cylindrical part 41 of the cover 40, preferably one-third or less of the thickness of the cylindrical part 41, and thus the strength of the cover 40 is secured, and the first bearing washer 10 and the second bearing washer 20 can be firmly joined to each other.

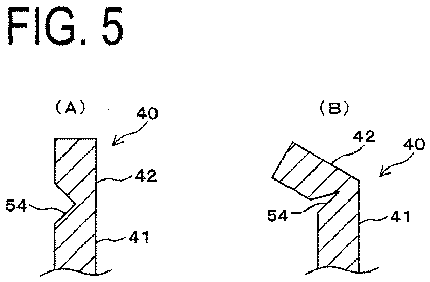

In the above first embodiment, the two inner side surfaces of the circumferential groove 44 are brought into close contact with each other after crimping. However, as illustrated in FIG. 5, the opening angle of a circumferential groove 54 may be set to be large so that the circumferential groove 54 has a V-shaped cross section after crimping. Even in this case, the two inner side surfaces of the circumferential groove 44 come into contact with each other in the vicinity of the intersection point of the two inner side surfaces (in the vicinity of the bottom part of the circumferential groove 44), and the load required for further bending increases. Thus, the angle formed by the bent part 42 and the cylindrical part 41 can be controlled, and the gap between the distal end edge of the bent part 42 and the chamfered part 12 of the first bearing washer 10 can be accurately set.

### 4. Second Embodiment

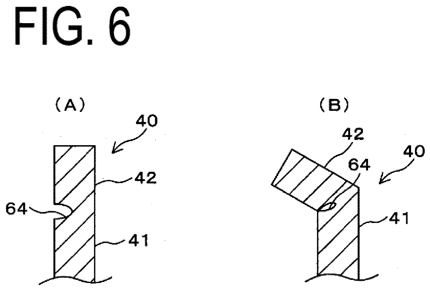

A second embodiment of the present invention will be described with reference to FIG. 6. In the second embodiment, the cross-sectional shape of a circumferential groove 64 before crimping is a semi-elliptical shape. In such a circumferential groove 64, when the bent part 42 is formed by crimping, the axial edge parts of the two inner side surfaces of the circumferential groove 64 are brought into close contact with each other after crimping. Therefore, also in the second embodiment, by setting the interval between the axial edge parts of the inner side surface of the circumferential groove 64, the angle formed by the bent part 42 and the cylindrical part 41 can be set, and the gap between the distal end edge of the bent part 42 and the chamfered part 12 of the first bearing washer 10 can be accurately set.

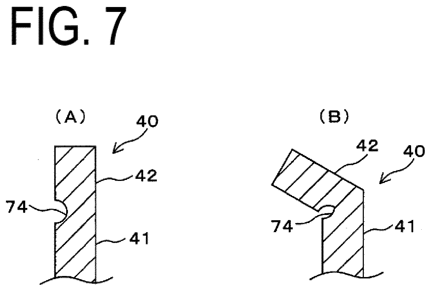

FIG. 7 illustrates a modification of the above second embodiment. In this modification, the cross-sectional shape of a circumferential groove 74 before crimping is a semicircular shape. The circumferential groove 74 is open even after the bent part 42 is formed by crimping. Note that the cross-sectional shape of the circumferential groove 74 may be semi-elliptical or U-shaped.

### 5. Modifications

The present invention is not limited to the embodiment described above, and it is possible to make various modifications as described below.
i) While the cover 40 is provided at the outer peripheral side of the first bearing washer 10 and the second bearing washer 20 in the above embodiment, the cover 40 may be provided at the inner peripheral side. In that case, chamfered parts are formed at corner parts of both axial end parts of the inner peripheral surfaces of the first bearing washer 10 and the second bearing washer 20, and bent parts facing the chamfered parts are formed at both end parts of the cover.
ii) The rolling elements 30 are not limited to spherical ones, and columnar ones or truncated conical ones can be used.
iii) In the above embodiment, the raceway grooves 11, 21 having an arc-shaped cross section are formed over the entire circumference in the first bearing washer 10 and the second bearing washer 20. However, a spherical recessed part for supporting the rolling elements 30 may be formed in the second bearing washer 20, and the surface of the first bearing washer 10 facing the spherical recessed part may be formed to be flat. The same applies to the case where the rolling elements 30 are columnar ones or truncated conical ones.

### Industrial Applicability

The present invention can be applied to various thrust bearings such as a thrust bearing for a king pin used in a suspension of an automobile or the like and a bolt with one bearing washer fixed to a head part to reduce torque at the time of fastening.

### Reference Signs List

1 Thrust bearing, 10 First bearing washer, 20 Second bearing washer, 11, 21 Raceway groove, 30 Rolling element, 12, 22 Chamfered part, 40 Cover, 41 Cylindrical part, 42, 43 Bent part, 44, 54, 64, 74 Circumferential groove

## Claims

1. A thrust bearing comprising:
a first bearing washer including a raceway groove;
a second bearing washer including a raceway groove;
a rolling element disposed between the raceway groove of the first bearing washer and the raceway groove of the second bearing washer; and
a holding member disposed covering outer peripheral surfaces or inner peripheral surfaces of the first bearing washer and the second bearing washer and holding the first bearing washer and the second bearing washer in an axial direction,
the holding member including a cylindrical part facing the outer peripheral surfaces or the inner peripheral surfaces of the first bearing washer and the second bearing washer and a bent part bent over an entire circumference with respect to the cylindrical part at at least one of axial end parts of the cylindrical part, and
a chamfered part being formed at a corner part of an outer peripheral surface or an inner peripheral surface of at least one of the first bearing washer or the second bearing washer, the chamfered part and the bent part of the holding member facing each other, wherein
a circumferential groove is formed at a boundary part between the bent part and the cylindrical part over an entire circumference of an inner peripheral surface or an outer peripheral surface.

2. The thrust bearing according to claim 1,
wherein a depth of the circumferential groove is equal to or less than half of a thickness of the cylindrical part of the holding member.

3. The thrust bearing according to claim 2,
wherein the depth of the circumferential groove is equal to or less than one-third of the thickness of the cylindrical part of the holding member.

4. The thrust bearing according to any one of claims 1 to 3,
wherein an inner side surface of the circumferential groove at one side in the axial direction and an inner side surface at the other side in the axial direction are at least partially in contact with each other.

5. The thrust bearing according to any one of claims 1 to 4,
wherein an inner side surface of the circumferential groove at one side in the axial direction and an inner side surface at the other side in the axial direction are entirely in contact with each other.

6. The thrust bearing according to any one of claims 1 to 3,
wherein the circumferential groove has a substantially V-shaped cross section.

7. The thrust bearing according to any one of claims 1 to 3,
wherein the circumferential groove has a substantially oval cross-sectional shape, and an end edge of an inner side surface of the circumferential groove at one side in the axial direction and an end edge of the inner side surface at the other side in the axial direction are in contact with each other.

8. The thrust bearing according to any one of claims 1 to 3,
wherein the circumferential groove has a substantially U-shaped cross section.

9. A method for manufacturing a thrust bearing including a first bearing washer including a raceway groove, a second bearing washer including a raceway groove, a rolling element disposed between the raceway groove of the first bearing washer and the raceway groove of the second bearing washer, and a holding member disposed covering outer peripheral surfaces or inner peripheral surfaces of the first bearing washer and the second bearing washer and holding the first bearing washer and the second bearing washer in an axial direction,
the holding member including a cylindrical part facing the outer peripheral surfaces or the inner peripheral surfaces of the first bearing washer and the second bearing washer and a bent part bent over an entire circumference with respect to the cylindrical part at at least one of axial end parts of the cylindrical part, and
a chamfered part being formed at a corner part of an outer peripheral surface or an inner peripheral surface of at least one of the first bearing washer and the second bearing washer, the chamfered part and the bent part of the holding member facing each other, the method comprising:
forming the cylindrical part and the bent part into a cylindrical shape having a uniform cross section;
forming a circumferential groove over an entire circumference of an inner peripheral surface or an outer peripheral surface at a terminal part of the cylindrical part; and
bending the cylindrical part at the circumferential groove to form the bent part by crimping.

10. The method for manufacturing a thrust bearing according to claim 9,
wherein in the crimping, an inner side surface of the circumferential groove at one side in the axial direction and an inner side surface at the other side in the axial direction are at least partially brought into contact with each other.

11. The method for manufacturing a thrust bearing according to claim 9,
wherein an inner side surface of the circumferential groove at one side in the axial direction and an inner side surface at the other side in the axial direction are entirely brought into contact with each other.

12. The method for manufacturing a thrust bearing according to claim 9,
wherein an inner side surface of the circumferential groove at one side in the axial direction and an inner side surface at the other side in the axial direction are separated from each other such that the circumferential groove after crimping has a substantially V-shaped cross section.

13. The method for manufacturing a thrust bearing according to claim 9,
wherein the circumferential groove has a substantially semicircular or substantially U-shaped cross section, and an end edge of an inner side surface of the circumferential groove at one side in the axial direction and an end edge of an inner side surface at the other side in the axial direction are brought into contact with each other.

14. The method for manufacturing a thrust bearing according to claim 9,
wherein the circumferential groove has a substantially semicircular or substantially U-shaped cross section, and an end edge of an inner side surface of the circumferential groove at one side in the axial direction and an end edge of an inner side surface at the other side in the axial direction are separated from each other.
